# EUROPEAN PATENT SPECIFICATION

(11) **EP 1 478 650 B1**
(45) Date of publication and mention of the grant of the patent: **30.09.2009**
(21) Application number: 02707083.8
(22) Date of filing: 25.02.2002
(51) Int. Cl.: C07F 5/04

(54) **NOVEL BORONATE ESTERS**
NEUE BORONATESTER
NOUVEAUX ESTERS DE BORONATE

(43) Date of publication of application: 24.11.2004
(73) Proprietor: Biocon Limited, Hebbagodi Bangalore 561 229 Karnataka (IN)
(72) Inventor: PUTHIAPRAMPIL, Tom, Thomas, 561 229 Karnataka (IN); SRINATH, Sumithra, 561-229 Karnataka (IN); SRIDHARAN, Madhavan, Karnataka (IN); GANESH, Sambasivam, Karnataka (IN)
(74) Representative: Robson, Aidan John
(86) International application number: PCT/IN2002/000032
(87) International publication number: WO 2003/070733

(56) References cited:
- EP-A2- 0 319 847
- EP-A2- 0 577 040
- EP-A2- 0 909 757
- WO-A-01/72706
- US-A- 5 481 009
- US-A- 5 998 633

## Description

### FIELD OF THE INVENTION

The present invention relates to optically active dihydroxy hexanoate derivatives of formula IIa and more particularly to compounds of formula II which are useful intermediates for the synthesis of HMG-CoA enzyme inhibitors like atorvastatin, cerivastatin, rosuvastatin, pitavastatiri, fluvastatin.

### BACKGROUND OF THE INVENTION

Esters and derivatives of the formula 1, 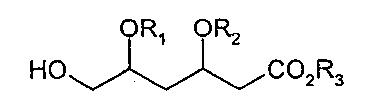 where R₁ and R₂ are independently chosen alkyl of one to three carbons and R₃ is alkyl of from 1 to 8 carbon atoms, alternatively compounds of formula 1a, 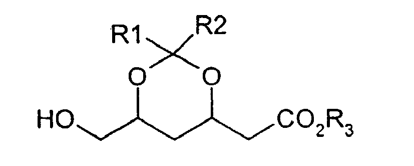 wherein R₁ and R₂ are independently chosen from alkyl of one to three carbons, phenyl or R₁ and R₂ taken together as -(CH2)n- wherein n is 4 or 5 and R₃ is alkyl of from 1 to 8 carbon atoms and also compounds of Formula 1b 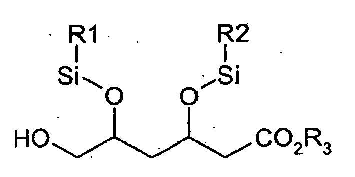 wherein R₁ and R₂ are alkyl of from 1-5 carbons and R₃ is as defined above is a valuable structural element for synthesizing compounds, which are known as anti-hypercholesterolemic agents having an inhibitory effect on HMG-CoA reductase.

EP 0 319 847 describes a process for the preparation of compounds of formula 1 starting from L-Malic acid. This process, however, suffers from the fact that the process is not industrially scalable and also possesses purification problems due to the non-crystalline nature of the intermediates.

US 5,399,722 describe a process starting from commercially available ethyl ω-cloroacetoacetate or its benzyloxy derivative. The disadvantages of this process are that a stereo selective reduction using a costly ruthenium-BINAP catalyst in employed and the desired compound of formula 1 is obtained in six steps.

US 5,481,009 describe a process starting from 4-phenyl-3-butenoic acid in about 5 steps. The process uses expensive materials like - N, O-Dimethyl hydroxylamine and hazardous steps (ozonolysis) to obtain the desired product.

US 5,998,633 describes a process for the preparation of protected esters of 3,4-dihydroxy butyric acid from a carbohydrate moiety which is transformed into the desired 3,4-dihydroxy butanoic acid derivatives in about 4 steps. The 3,4-dihydroxy butanoic acid derivative is then functionalized into compounds of formula I involving a multiple number of steps.

US 6,140,527 describes a process for producing butyric acid derivatives starting from a butene derivative followed by reaction with an addition reagent capable of adding across the double bond. However, this procedure does not afford chiral molecules and hence necessitates the need for a resolution step.

EP 0 104 750 describes a process for the preparation of 5-hydroxy-3-oxo pentanoic acid derivatives by alkylation of 3-hydroxybutyrate derivatives. The derivatives mentioned in this patent are racemic molecules and thus necessitating a resolution step.

The objective of the present is to provide a simple and industrially scalable process for the preparation of derivatives of formula I starting from commercially available and inexpensive malic acid.

### Summary of the invention

To achieve the said object the present invention provides a product of formula IIa and more particularly a compound of formula II 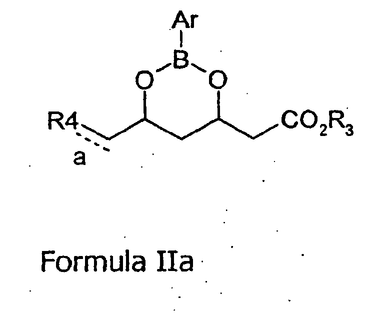 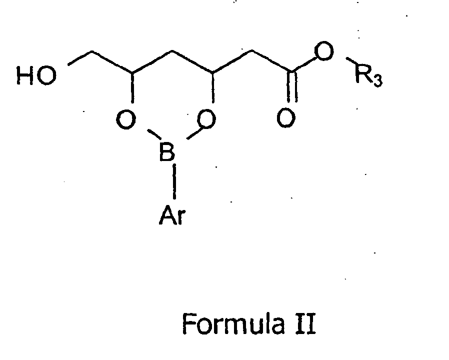 wherein
Ar = unsubstituted or substituted aryl or heteroaryl
R₃ = alkyl from 1 to 8 carbons, aryl or aralkyl
R₄ = O, OH, CN or a halogen and
a = single bond or double bond

The present invention also provides for a process for the manufacture of compounds of formula II 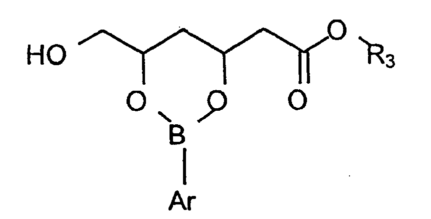
Ar = unsubstituted or substituted aryl or heteroaryl
R₃ = alkyl from 1 to 8 carbons, aryl or aralkyl
which comprises of:
(a) reacting compound of formula III with the anion of tertiary butyl acetate to give a compound of formula IV, where G is tetrahydropyranyl, tert-butyldimethyl silyl or trityl and R₃ is alkyl from 1 to 8 carbons, aryl or aralkyl, 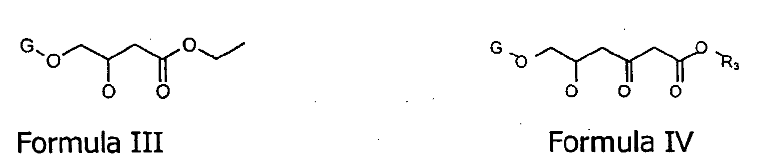
(b) subjecting compound of formula IV to reduction to give a compound of formula V, where G is tetrahydropyranyl, tert-butyldimethyl silyl or trityl and R₃ is alkyl from 1 to 8 carbons, aryl or aralkyl, 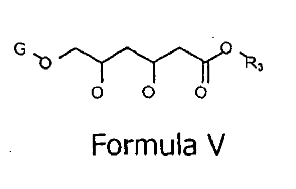
(c) protecting the compound of formula V with ArB(OH)₂ to give a compound of formula VI, where Ar is unsubstituted or substituted aryl or heteroaryl, G is tetrahydropyranyl, tert-butyldimethyl silyl or trityl and R₃ is alkyl from 1 to 8 carbons, aryl or aralkyl, and 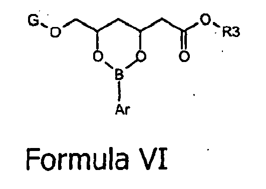
(f) deprotection of the compound of formula VI using mild acid catalyst to give a compound of formula II.

Said ArB(OH)₂ is boronic acid.

The compound of formula II is oxidized to a compound of formula VIII, where R₃ is alkyl from 1 to 8 carbons, aryl or aralkyl and Ar is unsubstituted or substituted aryl or heteroaryl using pyridinium chloro chromate or DMSO/oxalyl chloride.

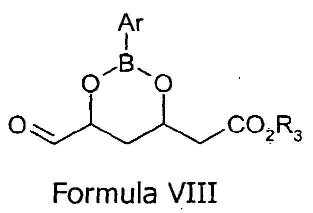

The compound of formula II is further converted to a compound of formula IX, where R₃ is alkyl from 1 to 8 carbons, aryl or aralkyl, Ar is unsubstituted or substituted aryl or heteroaryl and X is a halogen.

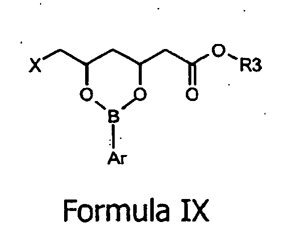

The compound of formula IX is further converted to a compound of formula VII, where R₃ is alkyl from 1 to 8 carbons, aryl or aralkyl, Ar is unsubstituted or substituted aryl or heteroaryl.

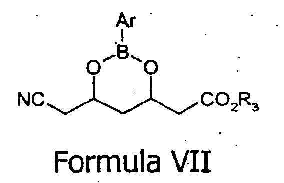

The product of formula IIa and more particularly of formula II are used in the synthesis of atorvastatin, cerivastatin, pitavastatin, fluvastatin or rosuvastatin.

### Detailed Description of the invention

Compound of formula II serves as a good intermediate for the synthesis of important substrates, which are useful in the synthesis of statins. Compound of formula II can be converted into a facile leaving group by treating with tosyl chloride, methane sulfonyl chloride and the resulting intermediate can be displaced with cyanide to give compounds of formula VII.

Compound of formula II can be converted to formula IX by reacting with aqueous HBr solution or by reaction with triphenyl phosphine and CBr₄ which is then converted to compound of formula VII.

Compound of formula II can be oxidized using standard procedures to give a compound of formula VIII.

The present invention relates to optically active dihydroxy hexanoate derivatives of formula IIa which are useful intermediates for the synthesis of HMG-CoA enzyme inhibitors like atorvastatin, cerivastatin, rosuvastatin, pitavastatin, fluvastatin.

The invention is further illustrated with examples below, which are not intended to be limiting.

### Example 1: Synthesis of methyl 4-triphenylmethyloxy-3-hydroxybutyrate (Formula III)

To 25g of methyl 3,4-dihydroxybutanoate was added to 250ml of DCM and stirred to dissolve and 19.8g of pyridine was charged and cooled to 0°C. 41.4g of trityl chloride was dissolved in 50ml of DMC and was added at 0-5°C for 15 min. The temperature was allowed to rise to RT and was stirred at RT for 17h. Water was added and the layers were separated. The organic layer was washed with brine, dried and concentrated. The residue was triturated with 25ml of cyclohexane and the product was purified to give 15g of the pure product.

NMR (CDCl₃) : 4.25 (m, 1H), 3.6 (s, 3H), 3.15 (d, 2H), 2.5 (m, 2H), 7.2-7.4 (m, 15H)

### Example 2: Synthesis of tert-butyl 6-triphenylmethyloxy-5-hydroxy-3-oxohexanoate (Formula IV)

To 125ml of THF, 24g of diisopropylamine were charged and was cooled to -15°C. 168ml of 1.2N n-BuLi was added at -15 to -5°C and was stirred for 30min. 21.56g of tert-butyl acetate in 45ml or THF which was pre-cooled to -45°C was added maintaining the temperature between -45 to -25°C for 60min. Cool the reaction mixture to -45°C and 30g of example-1 in THF was added over a period of 20min and the stirring was continued at -25°C for 90min. Water was added and the layers were separated. The aqueous layer was extracted using EtOAc and the combined organic layers were washed with brine, water, dried and concentrated to give the title compound which was used as such for the next step.

### Example 3: Synthesis of tert-butyl 6-triphenylmethyloxy-3,5-dihydroxhexanaote (Formula V)

To the crude material obtained in example-2, 150ml of THF was added followed by 15ml of MeOH and was chilled to -60°C. 26ml of MDEB (50% solution in THF) was added over a period of 20min and stirring was continued for a further 30min. The reaction mixture was cooled to -80°C and 5g of sodium borohydride was added in portions and the after completion of addition the reaction mixture was stirred for 5h at -78°C. Acetic acid was added to adjust the pH to 7 and water was added. The aqueous layer was extracted using EtOAc, washed with brine, dried and concentrated to give the title compound which was used as such for the next step.

### Example 4: Synthesis of tert-Butyl 6-triphenylmethyloxy-3,5-phenylboranatohexanoate (Formula VI)

The crude product from example-3 was dissolved in 100ml of toluene and 5.6g of phenyl boronic acid was added. Water was removed by azetropic distillation over a period of 3h. The reaction mixture was cooled to RT and toluene was removed under reduced pressure. 30ml of methanol was added and the precipitated solid was filtered to give 10g of the title product.

### Example 5: Synthesis of tert-butyl 6-hydroxy-3,5-(phenylboranato)hexanoate (Formula II)

To 5g of the product from example-4 20ml of DCM was added and was chilled to 0°C. 5ml of TFA was added and was stirred at 20°C for 6h. Water was separated and the organic layer was washed with bicarbonate; brine, dried and concentrated to give the title product, which was purified by column chromatography.

NMR (CDCl₃) : 7.7-7.8 (m, 2H), 7.4-7.5 (m, 1H), 7.3-7.4 (m, 2H), 4.5 (m, 1H), 4.2 (m, 1H), 3.6 (m, 1H), 3.5 (m, 1H), 2.55 (m, 1H), 2.45 (m, 1H), 2.0 (m, 1H), 1.7 (m, 1H) 1.5 (s, 9H)

### Example 6: Synthesis of tert-butyl 6-cyano-3,5-(phenylboranato)hexanoate (Formula VII)

5g of the product obtained from example 5 was taken in dichloromethane (50mL) and pyridine (10mL) was added. The contents were cooled to -10°C and methanesulfonyl chloride (1 eq) was added drop wise. After 5-6 hours of stirring at 0°C, the contents were washed with bicarbonate, water and brine. The solvent was removed under reduced pressure to afford the O-methanesulfonyl derivative, which was used as such for the next step.

The crude mesylate was taken in DMSO (5 vols.) and 1.5 equivalents of potassium cyanide was added. The contents were maintained at reflux for a period of 18-22h. DMSO was removed under reduced pressure and the contents were extracted using ethyl acetate and was washed with bisulfite, brine and solvent was removed under reduced pressure to afford the desired product.

### Example 7: Synthesis of t-butyl 6-oxo-3,5-phenylboranatohexanoate (Formula VIII)

4.3g of dimethylsulfoxide was added drop wise to a solution of 2.4ml of oxalyl chloride in 100ml of dichloromethane maintained at - 78°C. The mixture was stirred at that temperature for a period of 15min and 5g of the compound from example 5 dissolved in dichloromethane was added drop wise. After stirring for 15min, 17ml of triethyl amine was added and the reaction mixture was allowed to warm to ambient temperature in 2h period. Reaction mixture was concentrated and the residue was dissolved in water and extracted using diethyl ether. Removal of solvent affords the title compound.

### Example 8: Synthesis of tert-butyl 6-triphenylmethyloxy-3,5-(1-napththalenyl)boranatohexanoate (Formula VIa)

The crude product from example-3 was dissolved in 100 ml of toluene and 7.1 g of 1-napthalene boronic acid was added. Water was removed by azetropic distillation over a period 3h. The reaction mixture was cooled to RT and toluene was removed under reduced pressure.30ml of methanol was added and the precipitated solid was filtered to give 14g of the title product.

### Example 9: Synthesis of tert-butyl 6-triphenylmethyloxy-3,5-(2-methylphenyl)boranatohexanoate (Formula VIb)

The crude production from example-3 was dissolved in 100ml of toluene and 6.1g of 2-methylphenyl boronic acid was added. Water was removed by azetropic distillation over a period of 3h. The reaction mixture was cooled to RT and toluene was removed under reduced pressure. 30ml of methanol was added and the precipitated solid was filtered to give 12g of the title product.

### Example 10: Synthesis of tert-butyl 6-triphenylmethyloxy-3,5-(4-methoxyphenyl)boranatohexanoate (Formula VIc)

The crude product from example-3 was dissolved in 100ml of toluene and 6.3 g of 4-methoxyphenyl boronic acid was added. Water was removed by azetropic distillation over a period of 3h. The reaction mixture was cooled to RT and toluene was removed under reduced pressure. 30ml of methanol was added and the precipitated solid was filtered to give 12g of the title product.

### Example 11: Synthesis of tert-butyl 6-triphenylmethyloxy-3,5-(8-quinolinyl)boranatohexanoate (Formula VIf)

The crude product from example-3 was dissolved in 100ml of toluene and 6.1g of quinoline-8-boronic acid was added. Water was removed by azetropic distillation over a period of 3h. The reaction mixture was cooled to RT and toluene was removed under reduced pressure. 30ml of methanol was added and the precipitated solid was filtered to give 11g of the title product.

### Example 12: Synthesis of tert-butyl 6-triphenylmethyloxy-3,5-(3-nitrophenyl)boranatohexanoate (Formula VId)

The crude product from example-3 was dissolved in 100ml of toluene and 6.1 g of 3-nitrophenyl boronic acid was added. Water was removed by azetropic distillation over a period of 3h. The reaction mixture was cooled to RT and toluene was removed under reduced pressure. 30ml of methanol was added and the precipitated solid was filtered to give 10g of the title product.

### Example 13: Synthesis of tert-butyl 6-triphenylmethyloxy-3,5-(2,6-difluorophenyl)boranatohexanoate (Formula VIe)

The crude product from example-3 was dissolved in 100ml of toluene and 6.3 g of 2,6-difluorophenyl boronic acid was added. Water was removed by azetropic distillation over a period of 3h. The reaction mixture was cooled to RT and toluene was removed under reduced pressure. 30ml of methanol was added and the precipitated solid was filtered to give 12g of the title product.

| | |
|---|---|
| 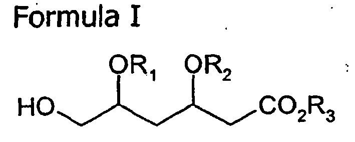 | 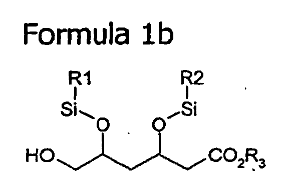 |
| R1 and R2 are alkyl 1 to 3 carbons | |
| R3 is alkyl from 1 to 8 carbons | R1 and R2 are alkyl from 1 to 5 carbons |
| | R 3 is alkyl from 1 to 8 carbons |
| 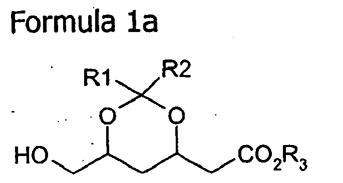 | 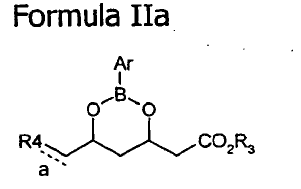 |
| R1 and R2 are alkyl 1 to 3 carbons or taken together as - | Ar = unsubstituted or substituted aryl or heteroaryl |
| (CH2)n- where n is 4 or 5 | R3 = alkyl from 1 to 8 carbons, aryl or aralkyl |
| R3 is alkyl from 1 to 8 carbons | R4 = OH, CN or X and a =single bond |
| | R4 = O and a = double bond |
| 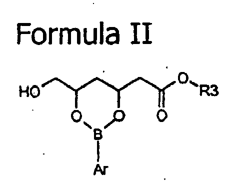 | 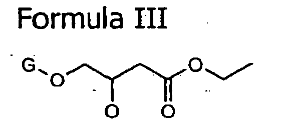 |
| | G = tetrahydropyranyl, tert-butyldimethyl silyl, trityl |
| Ar = Unsubstituted or substituted aryl or heteroaryl and R3 is carbon from 1-8 atoms, aryl or aralkyl | |
| 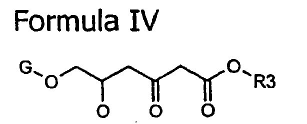 | 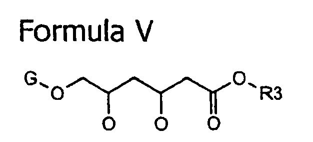 |
| G = tetrahydropyranyl, tert-butyldimethyl silyl, trityl and R3 = alkyl from 1 to 8 carbons, aryl or aralkyl | G = tetrahydropyranyl, tert-butyldimethyl silyl, trityl and R3 = alkyl from 1 to 8 carbons, aryl or aralkyl |
| 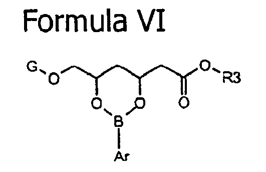 | 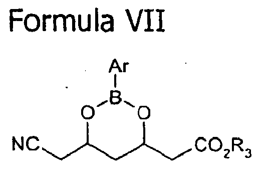 |
| G = tetrahydropyranyl, tert-butyldimethyl silyl, trityl and Ar = Unsubstituted or substituted aryl or heteroaryl and R3 is carbon from 1-8 atoms, aryl or aralkyl | Ar = Unsubstituted or substituted aryl or heteroaryl and R3 is carbon from 1-8 atoms, aryl or aralkyl |
| 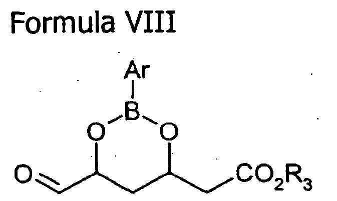 | 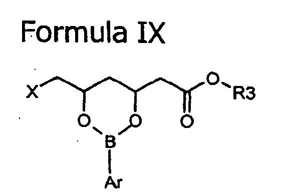 |
| Ar = Unsubstituted or substituted aryl or heteroaryl and R3 Is carbon from 1-8 atoms, aryl or aralkyl | Ar = Unsubstituted or substituted aryl or heteroaryl and R3 is carbon from 1-8 atoms, aryl or aralkyl and x = halogen |
| 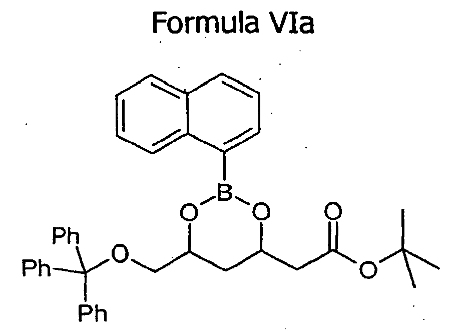 | 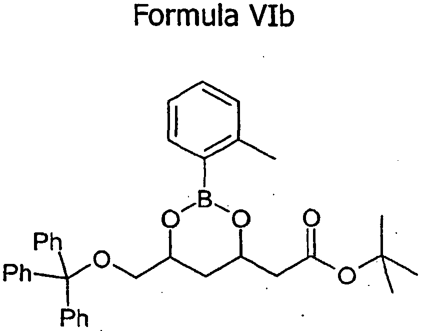 |
| tert-Butyl 6-triphenylmethyloxy-3,5-(1-naphthalenyl)boranatohexanoate | tert-Butyl 6-triphenylmethyloxy-3,5-(2-methylphenyl)boranatohexanoate |
| 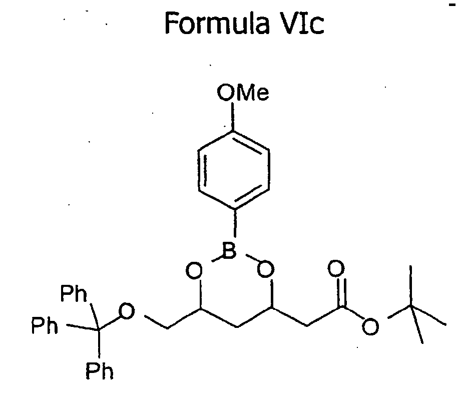 | 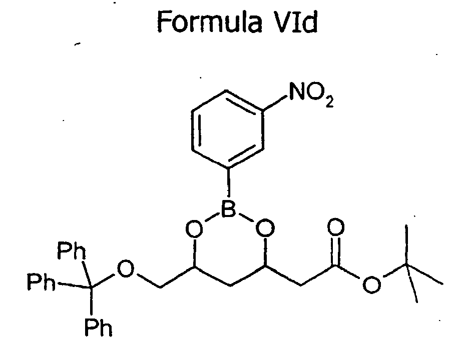 |
| tert-Butyl 6-triphenylmethyloxy-3,5-(4-methoxyohenyl)boranato hexanoate | tert-Butyl 6-triphenylmethyloxy-3,5-(3-nitrophenyl)boranato hexanoate |
| 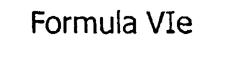 | 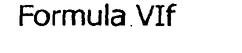 |
| 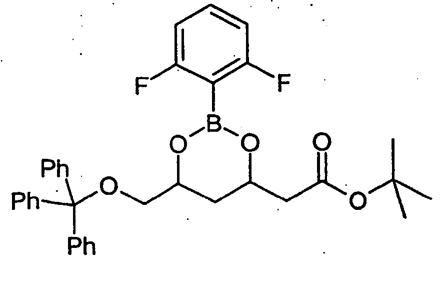 | 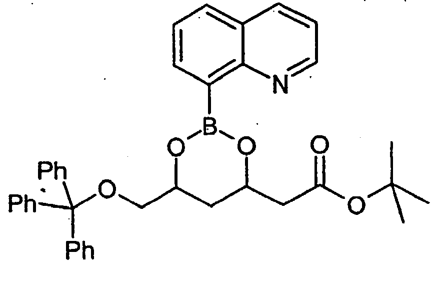 |
| tert-Butyl 6-triphenylmethyloxy-3,5-(2,6-difluorophenyl)boranato hexanoate | tert-Butyl 6-triphenylmethyloxy-3,5-(8-quinolinyl)boranato hexanoate |

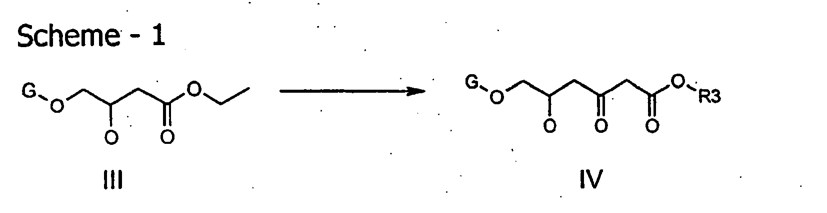

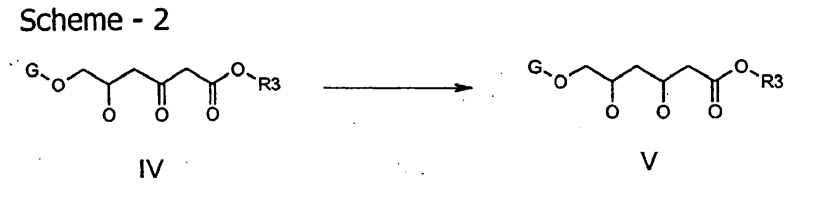

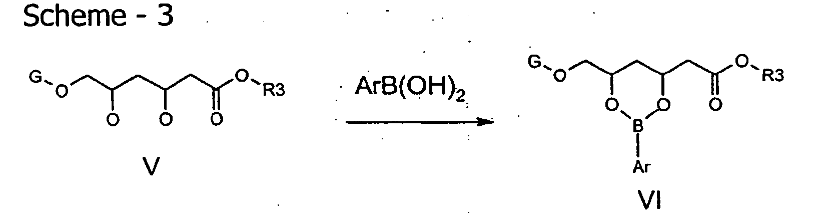

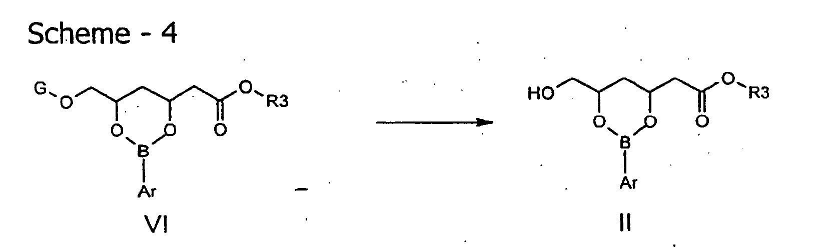

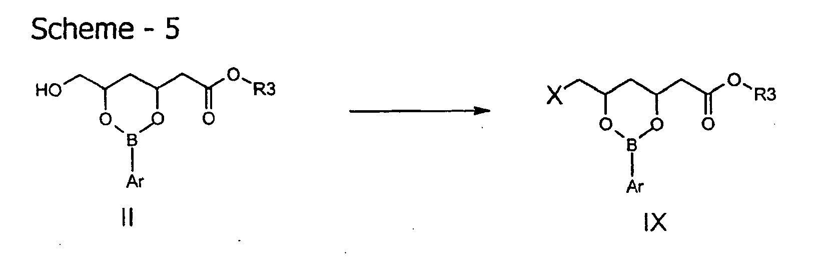

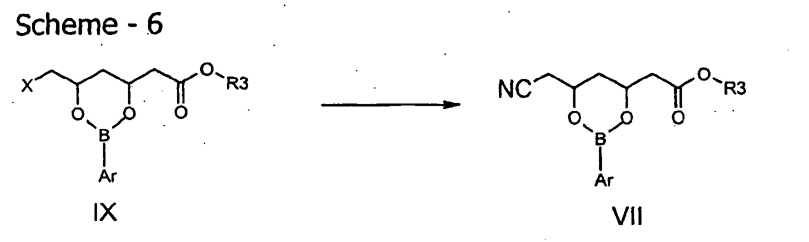

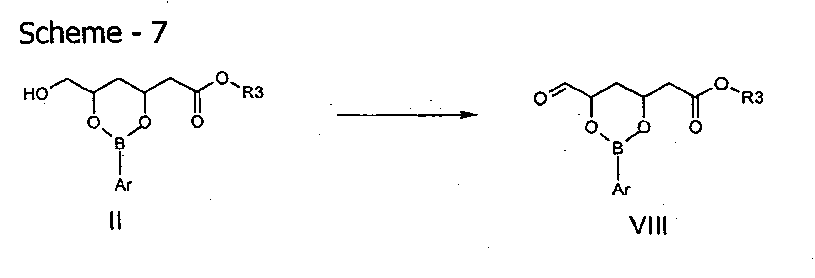

## Claims

1. The product of formula IIa 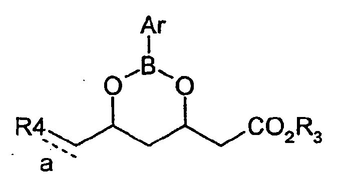 wherein
Ar = unsubstituted or substituted aryl or heteroaryl
R₃ = alkyl from 1 to 8 carbons, aryl or aralkyl
R₄ = O, OH, CN or a halogen and
a = single bond or double bond

2. The product as claimed in claim 1 wherein said product is a compound of formula II 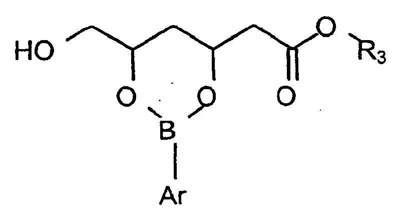 wherein
Ar = unsubstituted or substituted aryl or heteroaryl
R₃ = alkyl from 1 to 8 carbons, aryl or aralkyl

3. A process for the manufacture of compounds of formula II 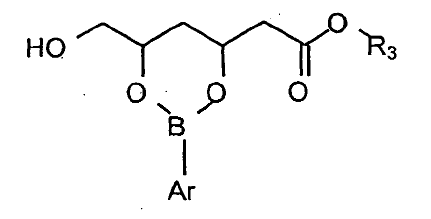
Ar = unsubstituted or substituted aryl or heteroaryl
R₃ = alkyl from 1 to 8 carbons, aryl or aralkyl
which comprises of:
(a) reacting compound of formula III with the anion of tertiary butyl acetate to give a compound of formula IV, where G is tetrahydropyranyl, tert-butyldimethyl silyl or trityl and R₃ is alkyl from 1 to 8 carbons, aryl or aralkyl, 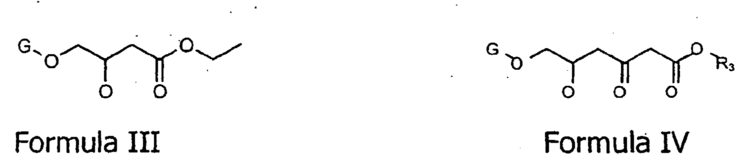
(b) subjecting compound of formula IV to reduction to give a compound of formula V, where G is tetrahydropyranyl, tert-butyldimethyl silyl or trityl and R₃ is alkyl from 1 to 8 carbons, aryl or aralkyl, 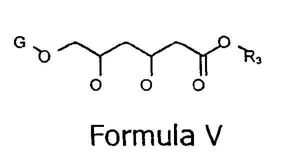
(c) protecting the compound of formula V with ArB(OH)₂ to give a compound of formula VI, where Ar is unsubstituted or substituted aryl or heteroaryl, G is tetrahydropyranyl, tert-butyldimethyl silyl or trityl and R₃ is alkyl from 1 to 8 carbons, aryl or aralkyl, and 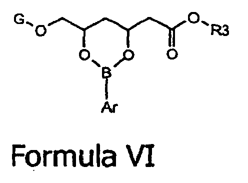
(f) deprotection of the compound of formula VI using mild acid catalyst to give a compound of formula II.

4. A process as claimed in claim 3 wherein ArB(OH)₂ is boronic acid.

5. A process as claimed in claim 3 wherein compound of formula II is oxidized to a compound of formula VIII, where R₃ is alkyl from 1 to 8 carbons, aryl or aralkyl and Ar is unsubstituted or substituted aryl or heteroaryl using pyridinium chloro chromate or DMSO/oxalyl chloride.

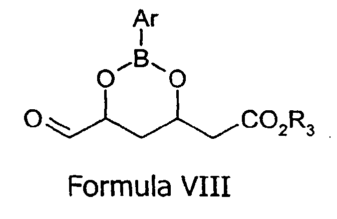

6. A process as claimed in claim 3 wherein compound of formula II is further converted to a compound of formula IX, where R₃ is alkyl from 1 to 8 carbons, aryl or aralkyl, Ar is unsubstituted or substituted aryl or heteroaryl and X is a halogen.

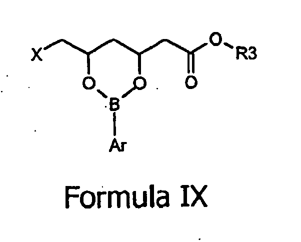

7. A process as claimed in claim 6 wherein compound of formula II is converted to compound of formula IX by reacting compound of formula II with aqueous HBr solution or by reaction with triphenyl phosphine and CBr₄.

8. A process as claimed in claim 6 or 7 wherein compound of formula IX is further converted to a compound of formula VII, where R₃ is alkyl from 1 to 8 carbons, aryl or aralkyl, Ar is unsubstituted or substituted aryl or heteroaryl.

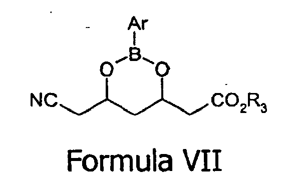

9. The product as claimed in claim 1, used in the synthesis of atorvastatin, cerivastatin, pitavastatin, fluvastatin or rosuvastatin.

## Patentansprüche

1. Produkt der Formel Iia 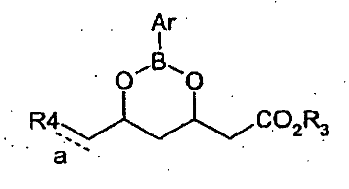 wobei
Ar = unsubstituiertes oder substituiertes Aryl oder Heteroaryl
R₃ = Alkyl mit 1 bis 8 Kohlenstoffen, Aryl oder Aralkyl
R₄ = O, OH, CN oder ein Halogen und
a = Einfachbindung oder Doppelbindung.

2. Produkt nach Anspruch 1, wobei das Produkt eine Verbindung der Formel II 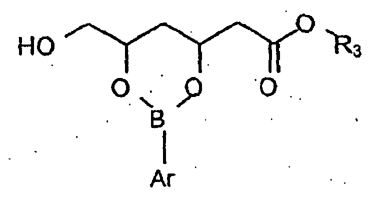 ist, wobei
Ar = unsubstituiertes oder substituiertes Aryl oder Heteroaryl
R₃ = Alkyl mit 1 bis 8 Kohlenstoffen, Aryl oder Aralkyl.

3. Verfahren für die Herstellung von Verbindungen der Formel II 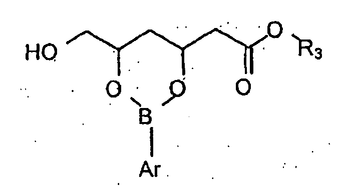
Ar = unsubstituiertes oder substituiertes Aryl oder Heteroaryl
R₃ = Alkyl mit 1 bis 8 Kohlenstoffen, Aryl oder Aralkyl,
das aus Folgendem besteht:
(a) Reagieren der Verbindung der Formel III mit dem Anion von tertiärem Butylacetat unter Bildung einer Verbindung der Formel IV, wobei G Tetrahydropyranyl, tert.-Butyldimethylsilyl oder -trityl ist, und R₃ Alkyl mit 1 bis 8 Kohlenstoffen, Aryl oder Aralkyl ist, 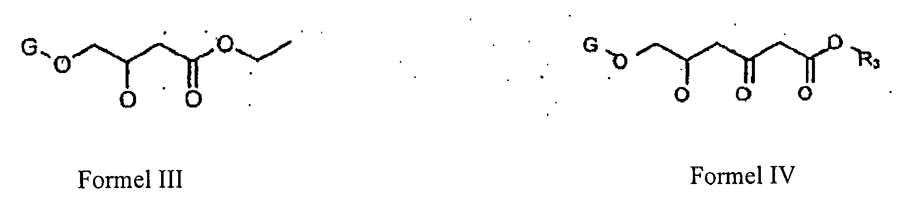
(b) Unterwerfen der Verbindung der Formel IV einer Reduktion unter Bildung einer Verbindung der Formel V, wobei G Tetrahydropyranyl, tert.-Butyldimethylsilyl oder -trityl ist, und R₃ Alkyl mit 1 bis 8 Kohlenstoffen , Aryl oder Aralkyl ist, 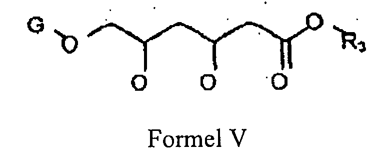
(b) Schützen der Verbindung der Formel V mit ArB(OH)₂ unter Bildung einer Verbindung der Formel VI, wobei Ar unsubstituiertes oder substituiertes Aryl oder Heteroaryl ist, G Tetrahydropyranyl, tert.-Butyldimethylsilyl oder -trityl ist, und R₃ Alkyl mit 1 bis 8 Kohlenstoffen, Aryl oder Aralkyl ist, 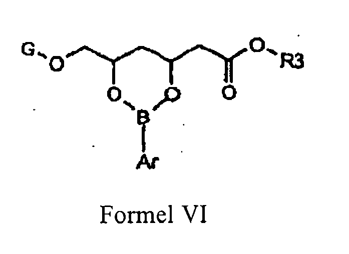
(f) Entschützen der Verbindung der Formel VI mit Hilfe eines schwach sauren Katalysators unter Bildung einer Verbindung der Formel II.

4. Verfahren nach Anspruch 3, wobei ArB(OH)₂ Boronsäure ist.

5. Verfahren nach Anspruch 3, wobei die Verbindung der Formel II zu einer Verbindung der Formel VIII oxidiert wird, wobei R₃ Alkyl mit 1 bis 8 Kohlenstoffen, Aryl oder Aralkyl ist, und Ar unsubstituiertes oder substituiertes Aryl oder Heteroaryl ist, unter Anwendung von Pyridiniumchlorchromat oder DMSO/Oxalylchlorid.

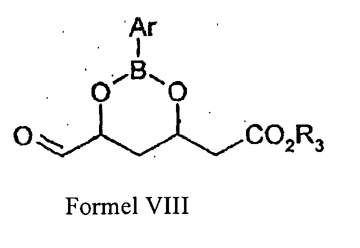

6. Verfahren nach Anspruch 3, wobei die Verbindung der Formel II des Weiteren zu einer Verbindung der Formel IX umgewandelt wird, wobei R₃ Alkyl mit 1 bis 8 Kohlenstoffen, Aryl oder Aralkyl ist, Ar unsubstituiertes oder substituiertes Aryl oder Heteroaryl ist und X ein Halogen ist.

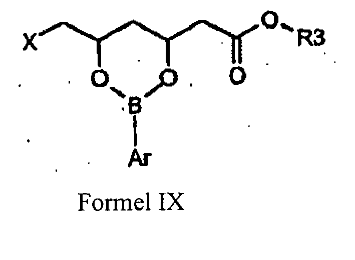

7. Verfahren nach Anspruch 6, wobei die Verbindung der Formel II zur Verbindung der Formel IX durch Reagieren der Verbindung der Formel II mit wässriger HBr-Lösung oder durch Reaktion mit Triphenylphosphin und CBr₄ umgewandelt wird.

8. Verfahren nach Anspruch 6 oder 7, wobei die Verbindung der Formel IX des Weiteren in eine Verbindung der Formel VII umgewandelt wird, wobei R₃ Alkyl mit 1 bis 8 Kohlenstoffen, Aryl oder Aralkyl ist, Ar unsubstituiertes oder substituiertes Aryl oder Heteroaryl ist.

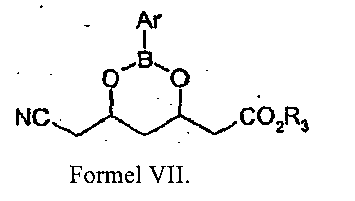

9. Produkt nach Anspruch 1, das bei der Synthese von Atorvastatin, Cerivastatin, Pitavastatin, Fluvastatin oder Rosuvastatin verwendet wird.

## Revendications

1. Produit de la formule IIa 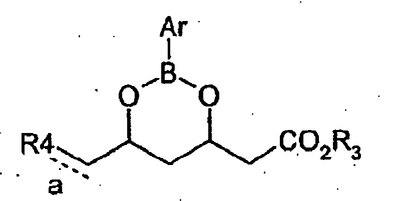 dans lequel
Ar = aryle ou hétéroaryle substitué ou non substitué
R₃ = alkyle de 1 à 8 carbones, aryle ou aralkyle
R₄ = O, OH, CN ou un halogène et
a = liaison simple ou liaison double

2. Produit tel que revendiqué à la revendication 1 dans lequel ledit produit est un composé de la formule II 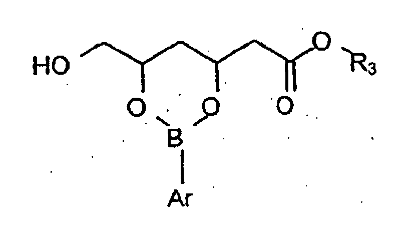 dans lequel
Ar = aryle ou hétéroaryle substitué ou non substitué
R₃ = alkyle de 1 à 8 carbones, aryle ou aralkyle

3. Processus pour la fabrication de composés de la formule II 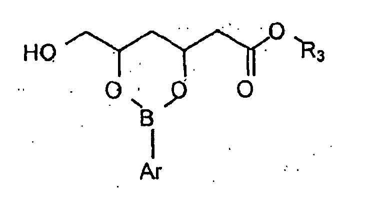
Ar = aryle ou hétéroaryle substitué ou non substitué
R₃ = alkyle de 1 à 8 carbones, aryle ou aralkyle
qui consiste à :
(a) faire réagir le composé de la formule III avec l'anion d'acétate de butyle tertiaire pour donner un composé de la formule IV, où G est un tétrahydropyranyle, tert-butyldiméthyle silyle ou trityle et où R₃ est un alkyle de 1 à 8 carbones, un aryle ou un aralkyle, 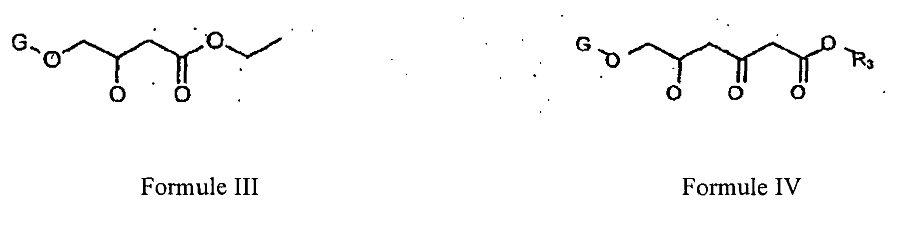
(b) exposer le composé de la formule IV à réduction pour donner un composé de la formule V, où G est un tétrahydropyranyle, tert-butyldiméthyle silyle ou trityle et où R₃ est un alkyle de 1 à 8 carbones, un aryle ou un aralkyle, 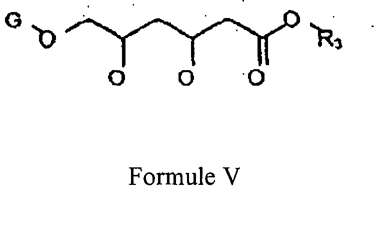
(c) protéger le composé de la formule V avec ArB(OH)₂ pour donner un composé de la formule VI, où Ar est un aryle ou hétéroaryle substitué ou non substitué, et où G est un tétrahydropyranyle, tert-butyldiméthyle silyle ou trityle et où R₃ est un alkyle de 1 à 8 carbones, un aryle ou un aralkyle, et 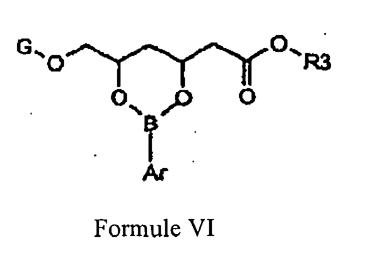
(f) déprotéger le composé de la formule VI au moyen d'un catalyseur acide doux pour donner un composé de la formule II.

4. Processus tel que revendiqué à la revendication 3 dans lequel ArB(OH)₂ est de l'acide boronique.

5. Processus tel que revendiqué à la revendication 3 dans lequel le composé de la formule II est oxydé en un composé de la formule VIII, où R₃ est un alkyle de 1 à 8 carbones, un aryle ou un aralkyle et où Ar est un aryle ou hétéroaryle non substitué ou substitué utilisant du chlorochromate de pyridinium ou du diméthylsulfoxyde/chlorure d'oxalyle.

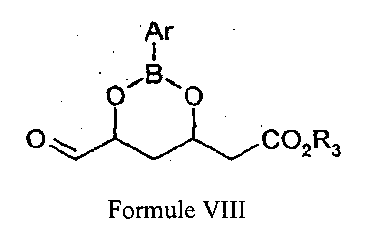

6. Processus tel que revendiqué à la revendication 3 dans lequel le composé de la formule II est en outre converti en un composé de la formule IX, où R₃ est un alkyl de 1 à 8 carbones, un aryle ou un aralkyle où Ar est un aryle ou hétéroaryle substitué ou non substitué et où X est un halogène.

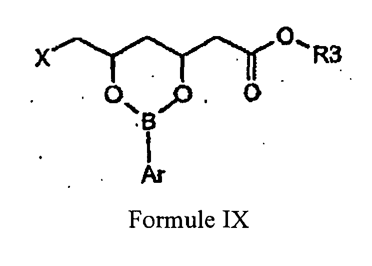

7. Processus tel que revendiqué à la revendication 6 dans lequel le composé de la formule II est converti en un composé de la formule IX par réaction du composé de la formule II avec une solution aqueuse de bromure d'hydrogène ou par réaction avec de la phosphine de triphényle et du tétrabromométhane.

8. Processus tel que revendiqué à la revendication 6 ou 7 dans lequel le composé de la formule IX est en outre converti en un composé de la formule VII, où R₃ est un alkyl de 1 à 8 carbones, un aryle ou un aralkyle et où Ar est un aryle ou hétéroaryle substitué ou non substitué.

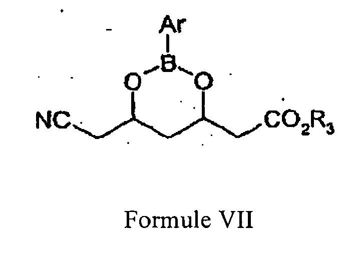

9. Produit tel que revendiqué à la revendication 1 utilisé dans la synthèse de l'atorvastatine, de la cérivastatine, pravastatine, fluvastatine ou rosuvastatine.
